# EUROPEAN PATENT APPLICATION

(11) **EP 4 657 877 A1**
(43) Date of publication of application: **03.12.2025**
(21) Application number: 24179293.6
(22) Date of filing: 31.05.2024
(51) Int. Cl.: H04Q 9/00, B60L 3/00, G05B 23/02, G06F 11/16

(54) **MANAGEMENT OF MEASUREMENT DATA RELATING TO AN ENERGY STORAGE SYSTEM**

(71) Applicant: VOLVO TRUCK CORPORATION, 405 08 Göteborg (SE)
(72) Inventor: RAY, Dripta, 412 76 GÖTEBORG (SE); Caroline, PALM, 411 05 GÖTEBORG (SE); ALTAF, Faisal, 421 43 VÄSTRA FRÖLUNDA (SE)
(74) Representative: Ström & Gulliksson AB

(57) **Abstract**

Disclosed is an energy storage system comprising a collection of one or more battery modules and a battery management system associated with the collection of battery modules.

The battery management system is configured to detect a battery event which indicates potential upcoming damage for the collection of battery modules. The battery management system is also configured to select - based on a type of the battery event (e.g., temperature event, electrical event, chemical event) - a sub-set of measurement data from a set of available measurement data relating to the collection of battery modules, and cause the selected sub-set of measurement data to be stored at a storing location which is unaffected by the potential upcoming battery damage for the collection of battery modules.

Corresponding computer system, battery management system, method, computer program product, and non-transitory computer-readable storage medium are also disclosed, as well as various equipment comprising the energy storage system.

## Description

### TECHNICAL FIELD

The disclosure relates generally to energy storage systems. In particular aspects, the disclosure relates to management of measurement data relating to an energy storage system. The disclosure can be applied to heavy-duty vehicles, such as trucks, buses, and construction equipment, among other vehicle types. Although the disclosure may be described with respect to a particular vehicle, the disclosure is not restricted to any particular vehicle. More generally, the disclosure can be applied to any piece of equipment comprising an energy storage system. Examples of such pieces of equipment include - but are not limited to - land vehicles (e.g., heavy-duty vehicles), marine vehicles (e.g., boats), aerial/space vehicles (e.g., drones), construction equipment appliances (e.g., excavators), mobile or stationary industrial appliances (e.g., robots), energy distribution network stations, stationary battery energy storage systems (BESS; e.g., used for grid applications), etc.

### BACKGROUND

Energy storage systems, such as battery arrangements for vehicles, risk being damaged by hazardous events (e.g., excessive temperatures, excessive currents, and chemical leaks). After a hazardous event, it may be beneficial to analyze what occurred before and/or during the hazardous event (e.g., to determine root cause and/or suitable improvements).

However, if the energy storage system was (fully or partially) damaged by the hazardous event, measurement data relating to the energy storage system may be lost and it may be cumbersome to perform such analysis.

Therefore, there is a need for improved approaches to management of measurement data relating to energy storage systems.

### SUMMARY

According to a first aspect of the disclosure, a computer system is provided for managing measurement data relating to an energy storage system. The computer system comprises processing circuitry configured to detect a battery event which indicates potential upcoming battery damage for the energy storage system. The processing circuitry is also configured to select a sub-set of measurement data from a set of available measurement data based on a type of the battery event, and cause the selected sub-set of measurement data to be stored at a storing location which is unaffected by the potential upcoming battery damage.

The first aspect of the disclosure may seek to improve management of measurement data relating to energy storage systems. A technical benefit may include that measurement data relating to an energy storage system is safeguarded from battery damage. Alternatively or additionally, a technical benefit may include that the measurement data which is most crucial for analysis of the specific type of battery event can be prioritized in the safeguarding process. Yet alternatively or additionally, a technical benefit may include that efficiency of the safeguarding process can be improved (e.g., in terms of storing space and/or transmission resources).

According to a second aspect of the disclosure, a battery management system is provided. The battery management system is configured to be comprised in an energy storage system and to be associated with a collection of one or more battery modules of the energy storage system. The battery management system is also configured to detect a battery event which indicates potential upcoming damage for the collection of battery modules, select (based on a type of the battery event) a sub-set of measurement data from a set of available measurement data relating to the collection of battery modules, and cause the selected sub-set of measurement data to be stored at a storing location which is unaffected by the potential upcoming battery damage for the collection of battery modules.

The second aspect of the disclosure may seek to improve management of measurement data relating to energy storage systems. A technical benefit may include that measurement data relating to an energy storage system is safeguarded from battery damage. Alternatively or additionally, a technical benefit may include that the measurement data which is most crucial for analysis of the specific type of battery event can be prioritized in the safeguarding process. Yet alternatively or additionally, a technical benefit may include that efficiency of the safeguarding process can be improved (e.g., in terms of storing space and/or transmission resources).

According to a third aspect of the disclosure, an energy storage system is provided, which comprises a collection of one or more battery modules and a battery management system associated with the collection of battery modules. The battery management system is configured to detect a battery event which indicates potential upcoming damage for the collection of battery modules, select (based on a type of the battery event) a sub-set of measurement data from a set of available measurement data relating to the collection of battery modules, and cause the selected sub-set of measurement data to be stored at a storing location which is unaffected by the potential upcoming battery damage for the collection of battery modules.

The third aspect of the disclosure may seek to provide an energy storage system with improved management of measurement data relating to the energy storage systems. A technical benefit may include that measurement data relating to an energy storage system is safeguarded from battery damage. Alternatively or additionally, a technical benefit may include that the measurement data which is most crucial for analysis of the specific type of battery event can be prioritized in the safeguarding process. Yet alternatively or additionally, a technical benefit may include that efficiency of the safeguarding process can be improved (e.g., in terms of storing space and/or transmission resources).

Optionally in some examples, including in at least one preferred example, the storing location may comprise a remote storing location in relation to equipment comprising the energy storage system, and the battery management system may be configured to cause the selected sub-set of measurement data to be stored at the storing location by transmission of the selected sub-set of measurement data to the remote storing location. A technical benefit may include that the risk of losing the measurement data is very low. Alternatively or additionally, a technical benefit may include that the measurement data may be combined with other measurement data relating to other energy storage systems and associated with a same type of battery event to form measurement data statistics which can improve the analysis.

Optionally in some examples, including in at least one preferred example, the storing location may comprise an on-board storing location of equipment comprising the energy storage system, which is at a distance from the potential upcoming battery damage, wherein the distance exceeds a distance threshold, and the battery management system may be configured to cause the selected sub-set of measurement data to be stored at the storing location by transfer of the selected sub-set of measurement data to the on-board storing location. A technical benefit may include that the risk of losing the measurement data is relatively low while no remote connection is necessary.

Optionally in some examples, including in at least one preferred example, the storing location may comprise two or more different on-board storing locations of equipment comprising the energy storage system, and the battery management system may be configured to cause the selected sub-set of measurement data to be stored at the storing location by transfer of a copy of the selected sub-set of measurement data to each of the different on-board storing locations. A technical benefit may include that the risk of losing the measurement data is reduced compared to having a single on-board storing location. Alternatively or additionally, a technical benefit may include that knowledge regarding the location of the energy storage system is not required.

According to a fourth aspect of the disclosure, a piece of equipment is provided which comprises the energy storage system of the third aspect. The piece of equipment further comprises one or more on-board storing location(s) and/or a transmitter configured to transmit the selected sub-set of measurement data to a remote storing location.

The fourth aspect of the disclosure may seek to provide a piece of equipment with improved management of measurement data relating to an energy storage system comprised in the piece of equipment. A technical benefit may include that measurement data relating to an energy storage system is safeguarded from battery damage. Alternatively or additionally, a technical benefit may include that the measurement data which is most crucial for analysis of the specific type of battery event can be prioritized in the safeguarding process. Yet alternatively or additionally, a technical benefit may include that efficiency of the safeguarding process can be improved (e.g., in terms of storing space and/or transmission resources).

Optionally in some examples, including in at least one preferred example, the piece of equipment may be one of: a land vehicle, a marine vehicle, an aerial vehicle, a construction equipment appliance, a mobile or stationary industrial appliance, an energy distribution network station, and a stationary battery energy storage system.

According to a fifth aspect of the disclosure, a computer-implemented method is provided for managing measurement data relating to an energy storage system. The method comprises detecting (by processing circuitry of a computer system) a battery event which indicates potential upcoming battery damage for the energy storage system, selecting (by the processing circuitry) a sub-set of measurement data from a set of available measurement data, wherein the selection is based on a type of the battery event, and causing (by the processing circuitry) the selected sub-set of measurement data to be stored at a storing location which is unaffected by the potential upcoming battery damage.

The fifth aspect of the disclosure may seek to improve management of measurement data relating to energy storage systems. A technical benefit may include that measurement data relating to an energy storage system is safeguarded from battery damage. Alternatively or additionally, a technical benefit may include that the measurement data which is most crucial for analysis of the specific type of battery event can be prioritized in the safeguarding process. Yet alternatively or additionally, a technical benefit may include that efficiency of the safeguarding process can be improved (e.g., in terms of storing space and/or transmission resources).

Optionally in some examples, including in at least one preferred example, the storing location may comprise a remote storing location in relation to equipment comprising the energy storage system, and causing the selected sub-set of measurement data to be stored at the storing location may comprise transmitting the selected sub-set of measurement data to the remote storing location. A technical benefit may include that the risk of losing the measurement data is very low. Alternatively or additionally, a technical benefit may include that the measurement data may be combined with other measurement data relating to other energy storage systems and associated with a same type of battery event to form measurement data statistics which can improve the analysis.

Optionally in some examples, including in at least one preferred example, the storing location may comprise an on-board storing location of equipment comprising the energy storage system which is at a distance from the potential upcoming battery damage, wherein the distance exceeds a distance threshold, and causing the selected sub-set of measurement data to be stored at the storing location may comprise transferring the selected sub-set of measurement data to the on-board storing location. A technical benefit may include that the risk of losing the measurement data is relatively low while no remote connection is necessary.

Optionally in some examples, including in at least one preferred example, the storing location may comprise two or more different on-board storing locations of equipment comprising the energy storage system, and causing the selected sub-set of measurement data to be stored at the storing location may comprise transferring a copy of the selected sub-set of measurement data to each of the different on-board storing locations. A technical benefit may include that the risk of losing the measurement data is reduced compared to having a single on-board storing location. Alternatively or additionally, a technical benefit may include that knowledge regarding the location of the energy storage system is not required.

Optionally in some examples, including in at least one preferred example, the selected sub-set of measurement data may be a selected first sub-set of measurement data. The method may further comprise selecting (by the processing circuitry) a second sub-set of measurement data from the set of available measurement data with the selected first sub-set of measurement data removed, and causing (by the processing circuitry) the selected second sub-set of measurement data to be stored at the storing location, after storing of the selected first sub-set of measurement data. A technical benefit may include that measurement data which is less crucial for analysis of the specific type of battery event can be safeguarded from battery damage if possible.

According to a sixth aspect of the disclosure, a computer program product is provided which comprises program code for performing, when executed by the processing circuitry, the method of the fifth aspect.

According to a seventh aspect of the disclosure, a non-transitory computer-readable storage medium is provided which comprises instructions, which when executed by the processing circuitry, cause the processing circuitry to perform the method of the fifth aspect.

The sixth and/or seventh aspect of the disclosure may seek to convey program code for improved management of measurement data relating to energy storage systems. A technical benefit may include that a piece of equipment (e.g., a new vehicle and/or a legacy vehicle) comprising an energy storage system may be conveniently configured, by software installation/update, to perform improved management of measurement data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a flowchart illustrating a method according to some examples.
**FIG. 2A** is a schematic block diagram illustrating an arrangement for management of measurement data relating to an energy storage system according to some examples.
**FIG. 2B** is a schematic block diagram illustrating an energy storage system according to some examples.
**FIG. 3** is a schematic drawing illustrating measurement data relating to an energy storage system according to some examples.
**FIG. 4** is a schematic drawing illustrating a vehicle according to some examples.
**FIG. 5** is a schematic diagram illustrating a computer system for implementing examples disclosed herein according to some examples.
**FIG. 6** is a schematic drawing illustrating a computer program product in the form of a non-transitory computer-readable storage medium according to some examples.
**FIG. 7** is a schematic block diagram of a control unit according to some examples.

### DETAILED DESCRIPTION

The detailed description set forth below provides information and examples of the disclosed technology with sufficient detail to enable those skilled in the art to practice the disclosure.

When there occurs a hazardous event (e.g., excessive temperatures, excessive currents, and chemical leaks) in association with an energy storage systems, such as a battery arrangement for a vehicle, it may be beneficial to analyze what occurred before and/or during the hazardous event (e.g., to determine root cause and/or suitable improvements).

However, if the energy storage system was (fully or partially) damaged by the hazardous event, measurement data relating to the energy storage system may be lost and it may be cumbersome to perform such analysis.

Even if efforts are made to safeguard the measurement data relating to the energy storage system, there is a risk that not all of the measurement data can be safeguarded before it is lost due to the damage. Then, the measurement data which is most crucial for analysis of the specific type of battery event may not be available after the hazardous event has occurred.

Some approaches described herein improve management of measurement data relating to energy storage systems (e.g., to mitigate the above-described problem). According to some examples, measurement data relating to an energy storage system is safeguarded from battery damage. Thus, robust availability of the measurement data is enabled, thereby facilitating post analysis of the hazardous event (e.g., to determine root cause and/or suitable improvements). For example, measurement data which is most crucial for analysis of the specific type of battery event can be prioritized in the safeguarding process.

To exemplify further, if a hazardous event occurs (e.g., thermal runaway or fire) there may be a high risk of losing critical logged data regarding the energy storage system (e.g., battery usage, operational history, violations of limit, etc.). For example, data stored in an electronic control unit (ECU) positioned near the affected battery pack might get destroyed. If such data is lost, there is typically no possibility to do root cause analysis and recommend improvements. In addition, such data loss may also result in challenges regarding replacement/troubleshooting/repair (e.g., on battery module level or battery pack level) due to the inherent uncertainty.

One possible solution is to store the measurement data at multiple levels (e.g., using battery module memory to store module level data, battery pack memory to store pack level data, and energy storage system memory to store aggregated ESS level data). However, some, or all, of the data stored in this way may still be destroyed by battery damage.

In addition, measurement data may be uploaded periodically to a cloud storing system. However, the cloud uploads may occur such that they do not catch the relevant data before it is destroyed by battery damage. Furthermore, frequent uploading and/or uploading of large amounts of data requires substantial communication to take place (e.g., using a relatively large amount of radio resources).

Some approaches described herein improve management of measurement data relating to energy storage systems by event-based logging and storing of critical data. When a hazardous event is detected (e.g., by a vehicle ECU configured to monitor the energy storage system; such as a battery management unit - BMU), a control unit (e.g., a higher-level ECU; such as a vehicle control module - VCM) is triggered to acquire (e.g., request and receive) a sub-set of critical data (e.g., from the BMU) and transmit it as soon as possible to the cloud storing system (e.g., via telemetry gateway). Additionally or alternatively (e.g., if uploading was not possible), the sub-set of critical data can be stored in a local memory of the control unit and/or in any suitable memory located strategically far away from any potentially affected battery pack.

Some approaches described herein enable one or more of the following: robust storage of battery data, efficient storage of battery data (only backed up when needed), root cause analysis after a hazardous event, improved serviceability based on data-driven decision making, analytics of battery behavior prior to, and/or during, a hazardous event, and modelling of fault/failure dynamics based on the critical data.

Generally, the approaches described and exemplified herein are applicable for any piece of equipment that comprises an energy storage system (e.g., a piece of equipment configured to be operated using energy provided by the energy storage system, and/or to generate energy for charging of the energy storage system, and/or to transfer energy to/from the energy storage system to an external device). Some non-limiting examples include land vehicles, marine vehicles, aerial/space vehicles, construction equipment appliances, mobile and stationary industrial appliances, energy distribution network stations, and stationary battery energy storage systems. In the following description, a land vehicle in the form of a heavy-duty vehicle is used as an illustrative and non-limiting example.

Also generally, the term energy storage system (ESS) is meant to encompass any device or arrangement which is suitable for energy storage. In a typical example, an energy storage system may comprise a collection of one or more battery modules and a battery management system (BMS) associated with the collection of battery modules. Each battery module may comprise a number of battery cell(s). The battery modules may - optionally - be arranged in one or more (e.g., one, two, three, or four) battery packs. There may be a single BMS associated with (e.g., controlling/monitoring) all of the battery modules, or two or more BMSs wherein each BMS is associated with (e.g., controlling/monitoring) one or more respective battery module(s) (e.g., each BMS may be associated with one or more respective battery pack(s)).

Also generally, measurement data relating to an energy storage system can be any relevant data (i.e., any relevant information expressed as data) which describes some aspect of the energy storage system. For example, the measurement data relating to an energy storage system may comprise data which is suitable for post analysis of hazardous events.

A typical example of measurement data relating to an energy storage system is data that indicates parameter values acquired by measurements performed by sensor(s) comprised in (or otherwise associated with) the energy storage system; as well as any information derived therefrom. Thus, the term "measurement data" is meant to encompass raw measurement data as well as information derivable therefrom. Examples of the latter include estimation parameters which may be indirectly inferred by a BMS (e.g., based on behavior model(s) and sensor measurements).

For example, temperature sensor(s) may measure temperature(s) for one or more locations within, on, or in the vicinity of, the energy storage system or a battery module. Alternatively or additionally, voltage sensor(s) may measure one or more differential(s) and/or potential(s) of the energy storage system or a battery module (e.g., at the electrical pole(s)). Yet alternatively or additionally, current sensor(s) may measure one or more current(s) of the energy storage system or a battery module. Yet alternatively or additionally, chemical sensor(s) (e.g., gas sensor(s)) may measure signature(s)/concentration(s) of a chemical substance at one or more locations within, on, or in the vicinity of, the energy storage system or a battery module. Generally, any suitable type of sensor(s) may be used (e.g., pressure sensor(s), humidity sensor(s), audio sensor(s), ultrasound sensor(s), visual sensor(s), optical sensor(s), isolation resistance sensor(s), mechanical stress sensor(s), etc.). Examples of measurement data in the form of parameter values acquired by sensor measurements include (but are not limited to) temperature, voltage, current, etc. Examples of measurement data in the form of information derived from parameter values acquired by sensor measurements (e.g., indirectly inferred by a BMS) include (but are not limited to) previous usage history for the energy storage system, State of Charge (SOC) of the energy storage system, State of Power (SOP) of the energy storage system, State of Health (SOH) of the energy storage system, etc.

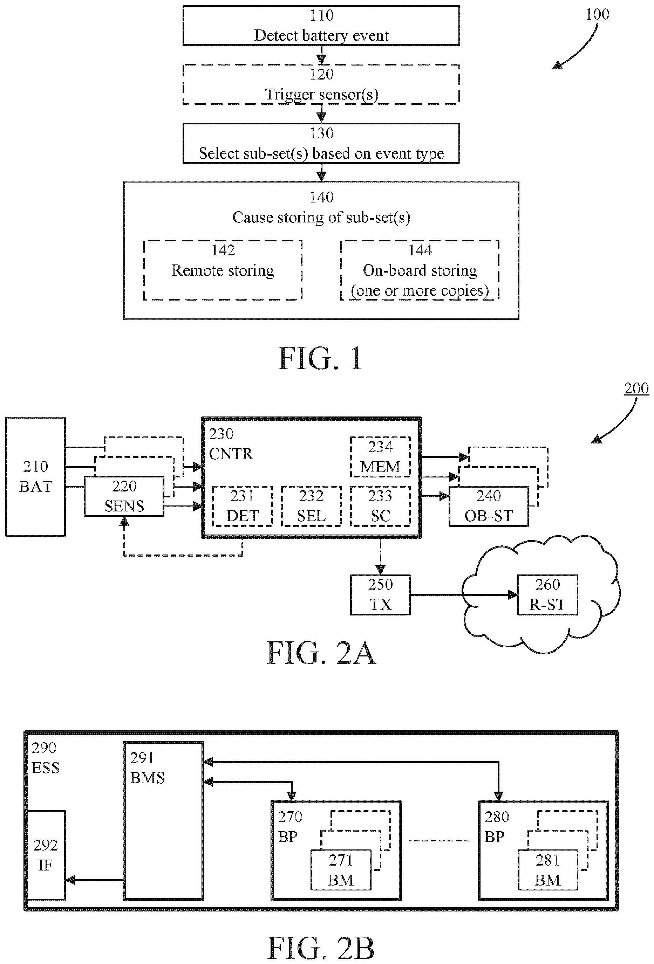

**FIG. 1** illustrates a method **100** according to some examples. The method **100** is a computer-implemented method for managing measurement data relating to an energy storage system. For example, the method **100** may be performed by a battery management system of the energy storage system, or by some other processing circuitry associated with the energy storage system.

In step **110,** a battery event which indicates potential upcoming battery damage for the energy storage system (a hazardous event) is detected. For example, the hazardous event may comprise a temperature event, an electrical event (current and/or voltage), or a chemical event (e.g., leakage). Battery damage may comprise anything that negatively affects the continued operation of the energy storage system and/or that causes loss of information (e.g., measurement data) relating to the operation of the energy storage system.

For example, step **110** may comprise receiving measurement data from one or more sensor(s) and a hazardous event may be detected based on the measurement data. For example, a hazardous event may be detected when a measurement value (e.g., temperature, current, voltage, chemical signature/concentration, etc.) exceeds a threshold value, and/or when an increase rate of a measurement value exceeds a threshold value.

In step **130,** a sub-set of measurement data is selected from a set of available measurement data. The selection is based on the type of the battery event that was detected in step **110.**

In step **140,** the selected sub-set of measurement data is cased to be stored at a storing location which is unaffected by the potential upcoming battery damage. For example, step **140** may comprise sending control signal(s) to one or more other device(s) or functional module(s) to trigger the storing. Alternatively or additionally, step **140** may comprise transferring or transmitting the selected sub-set of measurement data to the storing location.

In some examples, the storing location comprises a remote storing location (e.g., cloud-based storing, remote server storing, etc.) in relation to the piece of equipment that comprises the energy storage system. Then, step **140** may comprise transmitting (e.g., using any suitable wireless transmission techniques) the selected sub-set of measurement data to the remote storing location, as illustrated by optional sub-step **142.**

Alternatively or additionally, in some examples, the storing location comprises an on-board storing location of the piece of equipment that comprises the energy storage system, wherein the on-board storing location is at a distance from the potential upcoming battery damage, wherein the distance exceeds a distance threshold. Then, step **140** may comprise transferring the selected sub-set of measurement data to the on-board storing location, as illustrated by optional sub-step **144.**

Yet alternatively or additionally, in some examples, the storing location comprises two or more different on-board storing locations of the piece of equipment that comprises the energy storage system. Then, step **140** may comprise transferring a copy of the selected sub-set of measurement data to each of the different on-board storing locations, as illustrated by optional sub-step **144.** This provides for a redundancy solution. As long as at least two of the two or more different on-board storing locations are reasonably separated in space, at least one of them should be at a distance from the potential upcoming battery damage, wherein the distance exceeds a distance threshold.

The distance threshold may be used to define a safe distance from the potential upcoming battery damage. For example, the distance threshold may correspond to a distance where a probability is relatively low (e.g., lower than a probability threshold) that data stored at the on-board storing location is adversely affected (e.g., lost or damaged) by the potential upcoming battery damage.

The distance threshold may have a fixed value or may be dynamically variable. For example, the distance threshold may depend on the type of the battery event.

Any suitable combination is also possible, using both a remote storing location and one or more on-board storing location(s). For example, the on-board storing location(s) may be used if access to the remote storing location is not available, or the remote storing location may be used to provide redundancy for the on-board storing location(s).

The method **100** enables a prioritization among the measurement data in the set of available measurement data. Thus, if it is not suitable to move all of the measurement data in the set of available measurement data to a storing location which is unaffected by the potential upcoming battery damage, it may be determined which measurement data should be (initially) moved. For example, there may not be enough time to move all measurement data in the set of available measurement data before the battery damage causes data loss. Alternatively or additionally, there may not be enough storage resources for all measurement data in the set of available measurement data. Yet alternatively or additionally, there may not be enough radio resources for transmission of all measurement data in the set of available measurement data.

The prioritization is based on the type of the battery event, which enables the selection of the sub-set of measurement data to be safely stored to focus on the data that is most needed for analysis of the currently relevant battery event. In a typical example, step **130** may comprise selection such that the sub-set comprises (only) data which is (particularly) relevant for post analysis of the type of potentially damaging event. For example, if excessive temperature was detected in step **110,** different types of measurement data may be required for analysis than if excessive current was detected in step **110.**

A potential benefit of the method **100** is that the most critical data relating to the currently detected event can be safeguarded against a quickly approaching upcoming damage (other data can then be safeguarded if there is time before the damage occurs).

A potential benefit of the method **100** is that the safeguarding of data is efficient (e.g. in terms of utilization of storage space and/or radio resources) when step **140** is only performed in response to the detection in step **110** (e.g., as opposed to continuous backup) and/or when only relevant data is selected in step **130.**

In some examples, the sub-set of measurement data selected in step **130** is a first sub-set of measurement data (e.g., data which is most relevant/critical for some purpose, such as analysis of the battery event). Then, the method **100** may further comprise selecting a second sub-set of measurement data from the set of available measurement data with the selected first sub-set of measurement data removed and causing the selected second sub-set of measurement data to be stored at the storing location.

The selection of the second sub-set may, or may not, be based on the type of the battery event that was detected in step **110.** For example, the second sub-set may comprise (only) data which is relevant for analysis of the battery event, but which was not included in the first sub-set (i.e., less critical, but still relevant).

The selection of the second sub-set may be performed as part of step **130,** or at a later stage in the process (e.g., in parallel to step **140,** or thereafter).

The second sub-set of measurement data may be stored at the storing location after storing of the first sub-set of measurement data. For example, the second sub-set of measurement data may be stored if possible before the battery damage has occurred (and the measurement data is possibly lost).

The second sub-set of measurement data may be stored at the same storing location as the first sub-set of measurement data, or at some other storing location. For example, the second sub-set of measurement data may be stored using only on-board storing location(s).

In some examples, the principles described for the first and second sub-sets may be extended to three or more sub-sets, such that there becomes a list of sub-sets with respective storing priority.

In some examples, as illustrated by optional step **120,** the method **100** may further comprise triggering one or more sensor(s) to perform measurements in response to the detection in step **110.** The triggering of step **120** may comprise one or more of: turning on one or more sensor(s) currently not performing measurements, increasing a sampling rate of one or more sensor(s) currently performing measurements at a relatively low sampling rate, and increasing a reporting rate of one or more sensor(s) currently reporting measurements at a relatively low reporting rate.

The triggering of step **120** may be based on the type of the battery event detected in step **110** (e.g., triggering different sensors for different types of hazardous events).

An advantage of step **120** is that a default operation mode of the sensor(s) may be applied where only measurements needed for the detection of step **110** are performed (e.g., some sensor(s) being turned off and/or some sensor(s) measuring/reporting relatively seldom). More intense operation mode(s) of the sensor(s) are then triggered when a hazardous event is detected. This approach can reduce the energy consumption of the sensor(s), and/or extend their life time.

**FIG. 2A** schematically illustrates an arrangement **200** according to some examples. The arrangement **200** is for management of measurement data relating to an energy storage system.

The arrangement **200** comprises a battery system (BAT) **210,** one or more sensor(s) (SENS; e.g., as previously exemplified) **220,** and a controller (CNTR; e.g., controlling circuitry or a control module) **230.** Furthermore, the arrangement **200** may comprise, or be associated with (e.g., operatively connected to), one or more on-board storing device(s) (OB-ST) **240.** Alternatively or additionally, the arrangement **200** may comprise, or be associated with (e.g., operatively connected to), a transmitter (TX) **250** configured to transmit data to a remote storing device (R-ST) **260.**

For example, the battery system **210** may be comprised in an energy storage system, possibly together with one or more of the sensor(s) **220** and/or the controller **230.** The battery system **210** may comprise a collection of one or more battery modules. Each battery module may comprise a number of battery cell(s). The battery modules may - optionally - be arranged in one or more (e.g., one, two, three, or four) battery packs. The controller **230** may be a battery management system associated with the battery system **210.** One or more of the on-board storing device(s) **240** may be implemented by an electronic control unit (ECU).

For example, the arrangement **200** may be comprised, or comprisable, in a piece of equipment (e.g., a vehicle). Alternatively or additionally, the arrangement **200** (in particular the controller **230)** may be configured to perform one or more steps of the method **100** of **FIG. 1****.**

The controller **230** is configured to detect a battery event which indicates potential upcoming battery damage for the energy storage system (compare with step **110** of **FIG. 1****).** For example, the controller **230** may be configured to receive measurement data from the sensor(s) **220** - which have been collected by measurements performed in, or on, or in a vicinity of, the battery system **210** - and detect a battery event when the measurement data fulfills some relevant condition (e.g., value or increase rate exceeding a threshold value). To this end, the controller **230** may comprise a detector (DET; e.g., detection circuitry or a detection module) **231** configured to detect the battery event.

The controller **230** is also configured to select a sub-set of measurement data from a set of available measurement data based on a type of the battery event (compare with step **130** of **FIG. 1****).** For example, the controller **230** may be configured to select measurement data which is most relevant for analysis of the type of event. To this end, the controller **230** may comprise a selector (SEL; e.g., selection circuitry or a selection module) **232** configured to perform the selection.

The set of available measurement data may be (currently or previously) received from the sensor(s) **220** and/or may be available from a memory (MEM; e.g., a non-volatile memory (NVM)) **234** comprised in, or associated with, the controller **230.**

The controller **230** is also configured to cause the selected sub-set of measurement data to be stored at a storing location which is unaffected by the potential upcoming battery damage (compare with step **140** of **FIG. 1****).** For example, the controller **230** may be configured to cause the selected sub-set of measurement data to be transferred to one or more of the on-board storing device(s) **240** and/or to cause the selected sub-set of measurement data to be transmitted by the transmitter **250** to the remote storing device **260.** To this end, the controller **230** may comprise a storing controller (SC; e.g., control signaling circuitry) **233** configured to cause the storing.

**FIG. 2B** schematically illustrates an energy storage system (ESS) **290** according to some examples.

The ESS **290** comprises a number of battery pack(s) (BP) **270, 280** (compare with the battery system **210** of **FIG. 2A****)** and a battery management system (BMS) **291** (compare with the controller **230** of **FIG. 2A****).** Each battery pack comprises a number of battery modules (BM) **271, 281,** which in turn comprises a number of battery cell(s) each. Generally, there may be a single BMS associated with all of the battery modules (as exemplified in **FIG. 2B****),** or two or more BMSs wherein each BMS is associated with one or more respective battery module(s).

The ESS **290** also comprises, or is otherwise associated with, one or more sensor(s) (compare with the sensor(s) **220** of **FIG. 2A****)** configured to perform measurements in relation to the battery pack(s) **270, 280** and provide the resulting measurement data to the BMS **291.**

Furthermore, the ESS **290** comprises an interface (IF) **292** for communication between the BMS **291** and one or more external device(s).

For example, the ESS **290** may be comprised, or comprisable, in a piece of equipment (e.g., a vehicle). Alternatively or additionally, the ESS **290** (in particular the BMS **291)** may be configured to perform one or more steps of the method **100** of **FIG. 1****.**

The BMS **291** is configured to detect a battery event which indicates potential upcoming battery damage for the energy storage system (compare with step **110** of **FIG. 1****).** For example, the BMS **291** may be configured to receive measurement data from the sensor(s) - which have been collected by measurements performed in, or on, or in a vicinity of, the battery pack(s) **270, 280** - and detect a battery event when the measurement data fulfills some relevant condition (e.g., value or increase rate exceeding a threshold value).

The BMS **291** is also configured to select a sub-set of measurement data from a set of available measurement data based on a type of the battery event (compare with step **130** of **FIG. 1****).** For example, the BMS **291** may be configured to select measurement data which is most relevant for analysis of the type of event.

The BMS **291** is also configured to cause the selected sub-set of measurement data to be stored at a storing location which is unaffected by the potential upcoming battery damage (compare with step **140** of **FIG. 1****).** For example, the BMS **291** may be configured to cause the selected sub-set of measurement data to be transferred to one or more on-board storing device(s) and/or to cause the selected sub-set of measurement data to be transmitted to a remote storing device. This may be achieved by using the interface **292** to send control signal(s) to one or more other device(s) to trigger the storing and/or to transfer the selected sub-set of measurement data to the storing location.

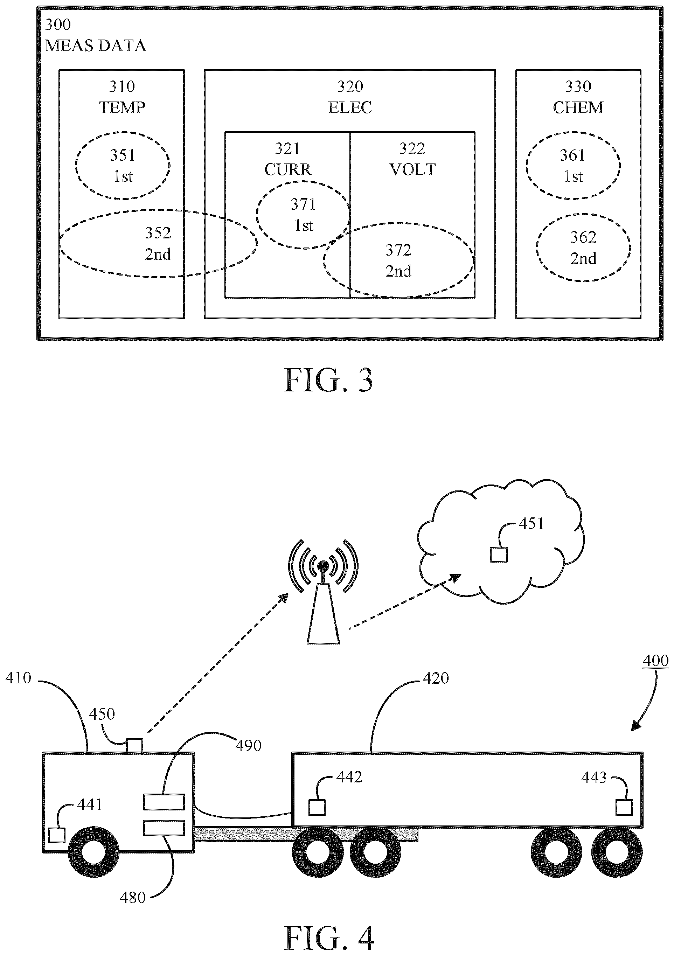

**FIG. 3** schematically illustrates measurement data (MEAS DATA) **300** relating to an energy storage system according to some examples. The measurement data **300** may be collected from one or more sensor(s) configured to perform measurements in relation to the energy storage system, as exemplified herein.

For example, the measurement data **300** may comprise one or more of: temperature data (TEMP) **310,** electric data (ELEC) **320** (e.g., comprising current data (CURR) **321** and/or voltage data (VOLT) 322), and chemical data (CHEM) **330.** Generally, the measurement data **300** may comprise data that indicates parameter values acquired by measurements performed by sensor(s) (e.g., temperature data, electric data, current data, voltage data, chemical data, pressure data, humidity data, audio data, ultrasound data, visual data, optical data, isolation resistance data, mechanical stress data, etc.), and/or any information derived therefrom (e.g., previous usage history, State of Charge (SOC), State of Power (SOP) of the energy storage system, State of Health (SOH), etc.).

In some examples, the measurement data **300** may comprise data collected at different moments in time, and each piece of data may possibly be provided with a corresponding time indication.

**FIG. 3** also schematically illustrates example sub-sets **351, 352, 361, 362, 371, 372** of measurement data which could be selected for safe storage based on the type of a detected battery event (compare with step **130** of **FIG. 1****).** For example, the sub-sets **351, 361, 371** may be considered as most critical for analysis of the battery event type and may be prioritized for safe storage (first sub-sets), while the sub-sets **352, 362, 372** may be considered as less critical - but still relevant - for analysis of the battery event type and may be safely stored thereafter if possible (second sub-sets).

The sub-set selection may comprise selecting - based on the detected battery event - data indicative of specific parameter(s), and/or specific measurement location(s), and/or specific measurement time(s).

For example, if excessive temperature is detected for a particular battery pack, all temperature data available within a specific time window (reaching from the past and/or into the future) and collected in the vicinity of the particular battery pack may be selected. Alternatively or additionally, prioritization may be applied to favor temperature data provided from sensor(s) which are located close to battery pack(s)/module(s)/cell(s) currently in a state that is linked to the hazardous event, over temperature data provided from other sensor(s). Temperature measurements may also be intensified in the vicinity of the particular battery pack by turning on more temperature sensor(s) and/or increasing a temperature measurement/reporting rate. Similar examples apply for excessive current/voltage and/or chemical leak detection.

Generally, any suitable approach may be applied to select which data to prioritize in relation to various hazardous events.

In some approaches, the selection comprises selecting one or more specific sensor(s) and/or a time window, and prioritize the raw measurement data from the selected sensor(s) and/or in within the time window. For example, when specific cell(s) can be identified as causing the hazardous event, it could be preferable to select/prioritize data which is measured by sensor(s) associated with (e.g., close to and/or measuring on) the specific cell(s).

In some approaches, the selection comprises selecting one or more specific type of measurement data (e.g., some type of raw measurement data, such as temperature, voltage, etc.), and prioritize the selected type of measurement data. For example, when a battery is in a resting state and suddenly goes into thermal runaway due to internal cell defects, it might not be possible to measure local current flow in the corresponding cells, so it could be preferable to select/prioritize voltage and temperature data over current data. Alternatively or additionally, it could be preferable to select/prioritize chemical data when there is detected a chemical event (e.g., gassing) due to internal cell defect.

It should be noted that the specific parameter(s) selected for safe storage is not necessarily the same as the parameter used to detect the battery event. The specific parameter(s) selected for safe storage may, or may not, include the parameter used to detect the battery event, and/or may include one or more other parameter(s). For example, if excessive current or chemical leak is detected, temperature may also be relevant for analysis.

Generally, a battery event which indicates potential upcoming battery damage could be any detectable event (e.g., a parameter and/or its increase rate exceeding a threshold value) for which there is some probability that it indicates upcoming battery damage.

Also generally, battery damage could be anything that negatively affects the continued operation of the energy storage system and/or that causes loss of information relating to the operation of the energy storage system. Examples include thermal runaway, fire, acidic corrosion, electrical shock, deformation damage caused by crash/collision, electric wiring failure, poisonous gassing, etc.

Also generally, the organization of battery event into types may be according to any suitable approach. Typically, but not necessarily, the types may relate to the parameter(s) used for detection and/or to the parameter(s) selected for safe storage. Alternatively or additionally, the types may relate to how quickly the battery damage is expected to take place after detection of the battery event. For example, if the expected time between detection and damage is relatively short, the selected sub-set may be relatively small to increase the likelihood that there is enough time to store it safely.

Also generally, that a storing location is unaffected by the potential upcoming battery damage could be defined as the storing location being able to keep the selected measurement data unaffected throughout the occurrence of the battery damage (or at least keep the selected measurement data with loss/corruption that does not exceed an acceptance threshold).

**FIG. 4** schematically illustrates an example vehicle **400** for cargo transport (an example piece or equipment) where the techniques disclosed herein can be advantageously applied. The vehicle **400** comprises a truck/tractor/towing unit **410** configured to tow one or more trailer unit(s) **420** in a known manner. For example, the tractor unit **410** and/or the trailer unit(s) **420** may comprise a vehicle control unit (VCU) **490** configured to perform various vehicle control functions, such as vehicle motion management (VMM), power/energy management, etc.

The vehicle **400** comprises an energy storage system (ESS) **480** (compare with the battery system **210** of **FIG. 2A** and the energy storage system **290** of **FIG. 2B****)** and processing circuitry for management of measurement data relating to an energy storage system (compare with the controller **230** of **FIG. 2A** and the battery management system **291** of **FIG. 2B****).**

The vehicle **400** also comprises one or more sensor(s) (compare with **220** of **FIG. 2A****)** configured to perform measurements in relation to the ESS **480** system and provide corresponding measurement data to the processing circuitry.

The vehicle **400** also comprises one or more on-board storing device(s) **441, 442, 443** (e.g., ECU(s); compare with **240** of **FIG. 2A****)** and/or a transmitter **450** (compare with **250** of **FIG. 2A****)** configured to transmit a selected sub-set of measurement data to a remote storing location **451** (compare with **260** of **FIG. 2A****)**

The processing circuitry may be associated with the ESS **480** in any suitable way. For example, the processing circuitry may be a battery management system (BMS) comprised in the ESS **480.** Alternatively or additionally, the processing circuitry may be implemented by any of the VCU(s) **490.** Yet alternatively or additionally, the processing circuitry may be implemented by any of the on-board storing device(s) **441, 442, 443.**

For example, the processing circuitry may be configured to perform one or more steps of the method **100** of **FIG. 1****.**

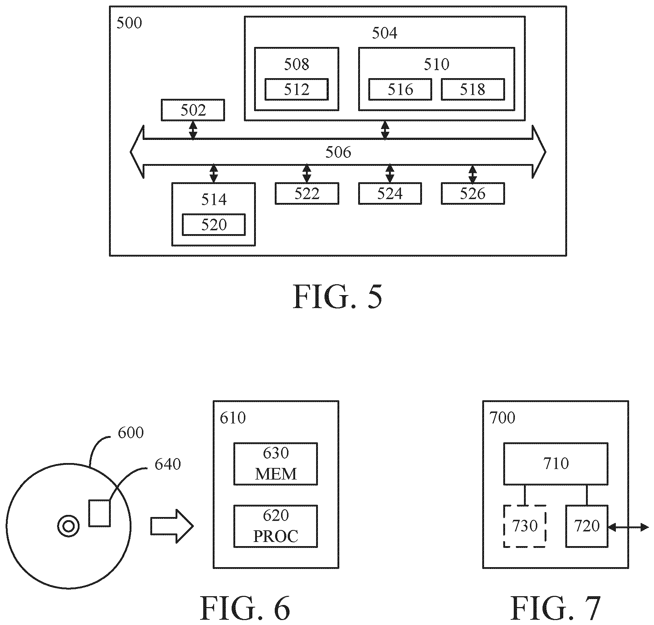

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

According to some examples, the computer system **500** may be suitable for managing measurement data relating to an energy storage system as described herein.

For example, the computer system **500** may be configured to perform, or cause performance of, one or more steps of the method **100** of **FIG. 1****.** Alternatively or additionally, the computer system **500** may be comprised in an energy storage system (e.g., the ESS **290** of **FIG. 2B****).** Yet alternatively or additionally, the computer system **500** may be comprised in, or comprise, a battery management system (e.g., the BMS **291** of **FIG. 2B****).** Yet alternatively or additionally, the computer system **500** may be comprised in, or comprise, one or more VCU(s) (e.g., the VCU **490** of **FIG. 4****).** Yet alternatively or additionally, the computer system **500** may be comprised in a vehicle (e.g., the vehicle **400** of **FIG. 4****).** Yet alternatively or additionally, the computer system **500** may implement the controller **230** of **FIG. 2A****.**

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU), a battery management system (BMS), or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 6** illustrates a computer program product **600** exemplified as a non-transitory computer-readable medium in the form of a compact disc (CD) ROM. The computer-readable medium has stored thereon program code **640** comprising instructions. The program code is loadable into processing circuitry (PROC; e.g., a data processing unit) **620,** which may, for example, be comprised in a processing unit **610.** When loaded into the processing circuitry, the program code may be stored in a memory (MEM) **630** associated with, or comprised in, the processing circuitry. According to some examples, the program code may, when loaded into, and run by, the processing circuitry, cause execution of method steps according to, for example, any of the methods described herein.

**FIG. 7** schematically illustrates, in terms of a number of functional units, the components of a control unit **700** according to some examples. This control unit **700** may be comprised in a piece of equipment; e.g., in the form of a VCU, a battery management system (BMS), or other suitable control unit. Processing circuitry **710** is provided using any combination of one or more of a suitable central processing unit CPU, multiprocessor, microcontroller, digital signal processor DSP, etc., capable of executing software instructions stored in a computer program product, e.g. in the form of a storage medium **730.** The processing circuitry **710** may further be provided as at least one application specific integrated circuit ASIC, or field programmable gate array FPGA.

Particularly, the processing circuitry **710** is configured to cause the control unit 700 to perform a set of operations, or steps, such as any of the methods discussed herein.

For example, the storage medium **730** may store the set of operations, and the processing circuitry **710** may be configured to retrieve the set of operations from the storage medium **730** to cause the control unit **700** to perform the set of operations. The set of operations may be provided as a set of executable instructions. Thus, the processing circuitry **710** is thereby arranged to execute methods as herein disclosed. In particular, there is disclosed a control unit **700** for controlling an articulated vehicle **400** comprising a tractor **410** and/or one or more towed vehicle units **420,** the control unit comprising processing circuitry **710,** an interface **720** coupled to the processing circuitry **710,** and a memory **730** coupled to the processing circuitry **710,** wherein the memory comprises machine readable computer program instructions that, when executed by the processing circuitry, causes the control unit to perform the methods discussed herein.

The storage medium **730** may also comprise persistent storage, which, for example, can be any single one or combination of magnetic memory, optical memory, solid state memory or even remotely mounted memory.

The control unit **700** may further comprise an interface **720** for communications with at least one external device. As such, the interface **720** may comprise one or more transmitters and receivers, comprising analogue and digital components and a suitable number of ports for wireline or wireless communication.

The processing circuitry **710** controls the general operation of the control unit **700,** e.g., by sending data and control signals to the interface **720** and the storage medium **730,** by receiving data and reports from the interface **720,** and by retrieving data and instructions from the storage medium **730.** Other components, as well as the related functionality, of the control node are omitted in order not to obscure the concepts presented herein.

### A non-exhaustive list of examples:

**Example 1:** A computer system for managing measurement data relating to an energy storage system, the computer system comprising processing circuitry configured to: detect a battery event which indicates potential upcoming battery damage for the energy storage system; select a sub-set of measurement data from a set of available measurement data based on a type of the battery event; and cause the selected sub-set of measurement data to be stored at a storing location which is unaffected by the potential upcoming battery damage.

**Example 2:** A battery management system configured to be comprised in an energy storage system and to be associated with a collection of one or more battery modules of the energy storage system, wherein the battery management system is configured to: detect a battery event which indicates potential upcoming damage for the collection of battery modules; select, based on a type of the battery event, a sub-set of measurement data from a set of available measurement data relating to the collection of battery modules; and cause the selected sub-set of measurement data to be stored at a storing location which is unaffected by the potential upcoming battery damage for the collection of battery modules.

**Example 3:** The battery management system of **Example 2,** wherein the storing location comprises a remote storing location in relation to equipment comprising the energy storage system, and wherein the battery management system is configured to cause the selected sub-set of measurement data to be stored at the storing location by transmission of the selected sub-set of measurement data to the remote storing location.

**Example 4:** The battery management system of any of **Examples 2-3,** wherein the storing location comprises an on-board storing location of equipment comprising the energy storage system which is at a distance from the potential upcoming battery damage, wherein the distance exceeds a distance threshold, and wherein the battery management system is configured to cause the selected sub-set of measurement data to be stored at the storing location by transfer of the selected sub-set of measurement data to the on-board storing location.

**Example 5:** The battery management system of any of **Examples 2-4,** wherein the storing location comprises two or more different on-board storing locations of equipment comprising the energy storage system, and wherein the battery management system is configured to cause the selected sub-set of measurement data to be stored at the storing location by transfer of a copy of the selected sub-set of measurement data to each of the different on-board storing locations.

**Example 6:** The battery management system of any of **Examples 2-5,** wherein the type of the battery event comprises one or more of: a temperature event, an electrical event, and a chemical event.

**Example 7:** The battery management system of any of **Examples 2-6,** wherein the selected sub-set of measurement data is a selected first sub-set of measurement data, and wherein the battery management system is further configured to: select, by the processing circuitry, a second sub-set of measurement data from the set of available measurement data with the selected first sub-set of measurement data removed; and cause, by the processing circuitry, the selected second sub-set of measurement data to be stored at the storing location, after storing of the selected first sub-set of measurement data.

**Example 8:** An energy storage system comprising a collection of one or more battery modules and a battery management system associated with the collection of battery modules, wherein the battery management system is configured to: detect a battery event which indicates potential upcoming damage for the collection of battery modules; select, based on a type of the battery event, a sub-set of measurement data from a set of available measurement data relating to the collection of battery modules; and cause the selected sub-set of measurement data to be stored at a storing location which is unaffected by the potential upcoming battery damage for the collection of battery modules.

**Example 9:** The energy storage system of **Example 8,** wherein the storing location comprises a remote storing location in relation to equipment comprising the energy storage system, and wherein the battery management system is configured to cause the selected sub-set of measurement data to be stored at the storing location by transmission of the selected sub-set of measurement data to the remote storing location.

**Example 10:** The energy storage system of any of **Examples 8-9,** wherein the storing location comprises an on-board storing location of equipment comprising the energy storage system, which is at a distance from the potential upcoming battery damage, wherein the distance exceeds a distance threshold, and wherein the battery management system is configured to cause the selected sub-set of measurement data to be stored at the storing location by transfer of the selected sub-set of measurement data to the on-board storing location.

**Example 11:** The energy storage system of any of **Examples 8-10,** wherein the storing location comprises two or more different on-board storing locations of equipment comprising the energy storage system, and wherein the battery management system is configured to cause the selected sub-set of measurement data to be stored at the storing location by transfer of a copy of the selected sub-set of measurement data to each of the different on-board storing locations.

**Example 12:** A piece of equipment comprising: the energy storage system of any of **Examples 8-11;** and one or more on-board storing location(s) and/or a transmitter configured to transmit the selected sub-set of measurement data to a remote storing location.

**Example 13:** The piece of equipment of **Example 12,** wherein the piece of equipment is one of: a land vehicle, a marine vehicle, an aerial vehicle, a construction equipment appliance, a mobile or stationary industrial appliance, an energy distribution network station, and a stationary battery energy storage system.

**Example 14:** A computer-implemented method for managing measurement data relating to an energy storage system, the method comprising: detecting, by processing circuitry of a computer system, a battery event which indicates potential upcoming battery damage for the energy storage system; selecting, by the processing circuitry, a sub-set of measurement data from a set of available measurement data, wherein the selection is based on a type of the battery event; and causing, by the processing circuitry, the selected sub-set of measurement data to be stored at a storing location which is unaffected by the potential upcoming battery damage.

**Example 15:** The method of **Example 14,** wherein the storing location comprises a remote storing location in relation to equipment comprising the energy storage system, and wherein causing the selected sub-set of measurement data to be stored at the storing location comprises transmitting the selected sub-set of measurement data to the remote storing location.

**Example 16:** The method of any of **Examples 14-15,** wherein the storing location comprises an on-board storing location of equipment comprising the energy storage system which is at a distance from the potential upcoming battery damage, wherein the distance exceeds a distance threshold, and wherein causing the selected sub-set of measurement data to be stored at the storing location comprises transferring the selected sub-set of measurement data to the on-board storing location.

**Example 17:** The method of any of **Examples 14-16,** wherein the storing location comprises two or more different on-board storing locations of equipment comprising the energy storage system, and wherein causing the selected sub-set of measurement data to be stored at the storing location comprises transferring a copy of the selected sub-set of measurement data to each of the different on-board storing locations.

**Example 18:** The method of any of **Examples 14-17,** wherein the type of the battery event comprises one or more of: a temperature event, an electrical event, and a chemical event.

**Example 19:** The method of any of **Examples 14-18,** wherein the selected sub-set of measurement data is a selected first sub-set of measurement data, the method further comprising: selecting, by the processing circuitry, a second sub-set of measurement data from the set of available measurement data with the selected first sub-set of measurement data removed; and causing, by the processing circuitry, the selected second sub-set of measurement data to be stored at the storing location, after storing of the selected first sub-set of measurement data.

**Example 20:** A computer program product comprising program code for performing, when executed by the processing circuitry, the method of any of **Examples 14-**19.

**Example 21:** A non-transitory computer-readable storage medium comprising instructions, which when executed by the processing circuitry, cause the processing circuitry to perform the method of any of **Examples 14-19.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for managing measurement data relating to an energy storage system (210, 290, 480), the computer system comprising processing circuitry (230, 291, 490) configured to:
detect a battery event which indicates potential upcoming battery damage for the energy storage system;
select a sub-set (351, 361, 371) of measurement data from a set (300) of available measurement data based on a type (310, 320, 330) of the battery event; and
cause the selected sub-set of measurement data to be stored at a storing location (234, 240, 260, 441, 442, 443, 451) which is unaffected by the potential upcoming battery damage.

2. A battery management system (291) configured to be comprised in an energy storage system (290) and to be associated with a collection (270, 280) of one or more battery modules (271, 281) of the energy storage system (290), wherein the battery management system is configured to:
detect a battery event which indicates potential upcoming damage for the collection of battery modules;
select, based on a type (310, 320, 330) of the battery event, a sub-set (351, 361, 371) of measurement data from a set (300) of available measurement data relating to the collection of battery modules; and
cause the selected sub-set of measurement data to be stored at a storing location (234, 240, 260, 441, 442, 443, 451) which is unaffected by the potential upcoming battery damage for the collection of battery modules.

3. An energy storage system (290) comprising a collection (270, 280) of one or more battery modules (271, 281) and a battery management system (291) associated with the collection (270, 280) of battery modules (271, 281), wherein the battery management system is configured to:
detect a battery event which indicates potential upcoming damage for the collection of battery modules;
select, based on a type (310, 320, 330) of the battery event, a sub-set (351, 361, 371) of measurement data from a set (300) of available measurement data relating to the collection of battery modules; and
cause the selected sub-set of measurement data to be stored at a storing location (234, 240, 260, 441, 442, 443, 451) which is unaffected by the potential upcoming battery damage for the collection of battery modules.

4. The energy storage system of claim 3, wherein the storing location comprises a remote storing location (260, 451) in relation to equipment (400) comprising the energy storage system (290), and wherein the battery management system (291) is configured to cause the selected sub-set of measurement data to be stored at the storing location by transmission of the selected sub-set of measurement data to the remote storing location.

5. The energy storage system of any of claims 3-4, wherein the storing location comprises an on-board storing location (234, 240, 441, 442, 443) of equipment (400) comprising the energy storage system (290), which is at a distance from the potential upcoming battery damage, wherein the distance exceeds a distance threshold, and wherein the battery management system (291) is configured to cause the selected sub-set of measurement data to be stored at the storing location by transfer of the selected sub-set of measurement data to the on-board storing location.

6. The energy storage system of any of claims 3-5, wherein the storing location comprises two or more different on-board storing locations (234, 240, 441, 442, 443) of equipment (400) comprising the energy storage system (290), and wherein the battery management system (291) is configured to cause the selected sub-set of measurement data to be stored at the storing location by transfer of a copy of the selected sub-set of measurement data to each of the different on-board storing locations.

7. A piece of equipment (400) comprising:
the energy storage system (290) of any of claims 3-6; and
one or more on-board storing location(s) (234, 240, 441, 442, 443) and/or a transmitter (250, 450) configured to transmit the selected sub-set of measurement data to a remote storing location (260, 451).

8. The piece of equipment of claim 7, wherein the piece of equipment is one of: a land vehicle (400), a marine vehicle, an aerial vehicle, a construction equipment appliance, a mobile or stationary industrial appliance, an energy distribution network station, and a stationary battery energy storage system.

9. A computer-implemented method (100) for managing measurement data relating to an energy storage system (210, 290, 480), the method comprising:
detecting (110), by processing circuitry (230, 291, 490) of a computer system (500), a battery event which indicates potential upcoming battery damage for the energy storage system;
selecting (130), by the processing circuitry, a sub-set (351, 361, 371) of measurement data from a set (300) of available measurement data, wherein the selection is based on a type (310, 320, 330) of the battery event; and
causing (140), by the processing circuitry, the selected sub-set of measurement data to be stored at a storing location (234, 240, 260, 441, 442, 443, 451) which is unaffected by the potential upcoming battery damage.

10. The method of claim 9, wherein the storing location comprises a remote storing location in relation to equipment comprising the energy storage system, and wherein causing (140) the selected sub-set of measurement data to be stored at the storing location comprises transmitting (142) the selected sub-set of measurement data to the remote storing location.

11. The method of any of claims 9-10, wherein the storing location comprises an on-board storing location of equipment comprising the energy storage system which is at a distance from the potential upcoming battery damage, wherein the distance exceeds a distance threshold, and wherein causing (140) the selected sub-set of measurement data to be stored at the storing location comprises transferring (144) the selected sub-set of measurement data to the on-board storing location.

12. The method of any of claims 9-11, wherein the storing location comprises two or more different on-board storing locations of equipment comprising the energy storage system, and wherein causing (140) the selected sub-set of measurement data to be stored at the storing location comprises transferring (144) a copy of the selected sub-set of measurement data to each of the different on-board storing locations.

13. The method of any of claims 9-12, wherein the selected sub-set (351, 361, 371) of measurement data is a selected first sub-set of measurement data, the method further comprising:
selecting, by the processing circuitry, a second sub-set (352, 362, 372) of measurement data from the set of available measurement data with the selected first sub-set of measurement data removed; and
causing, by the processing circuitry, the selected second sub-set of measurement data to be stored at the storing location, after storing of the selected first sub-set of measurement data.

14. A computer program product (600) comprising program code for performing, when executed by the processing circuitry, the method of any of claims 9-13.

15. A non-transitory computer-readable storage medium (600) comprising instructions, which when executed by the processing circuitry, cause the processing circuitry to perform the method of any of claims 9-13.

## Amended claims

### Amended claims in accordance with Rule 137(2) EPC.

1. A computer system (500) for managing measurement data relating to an energy storage system (210, 290, 480), the computer system comprising processing circuitry (230, 291, 490) configured to:
detect a battery event which indicates potential upcoming battery damage for the energy storage system;
select a sub-set (351, 361, 371) of measurement data from a set (300) of available measurement data based on a type (310, 320, 330) of the battery event, wherein the selected sub-set of measurement data is most relevant - among the available measurement data - for analysis of the battery event; and
cause the selected sub-set of measurement data to be stored at a storing location (234, 240, 260, 441, 442, 443, 451) which is unaffected by the potential upcoming battery damage.

2. A battery management system (291) configured to be comprised in an energy storage system (290) and to be associated with a collection (270, 280) of one or more battery modules (271, 281) of the energy storage system (290), wherein the battery management system is configured to:
detect a battery event which indicates potential upcoming damage for the collection of battery modules;
select, based on a type (310, 320, 330) of the battery event, a sub-set (351, 361, 371) of measurement data from a set (300) of available measurement data relating to the collection of battery modules, wherein the selected sub-set of measurement data is most relevant - among the available measurement data - for analysis of the battery event; and
cause the selected sub-set of measurement data to be stored at a storing location (234, 240, 260, 441, 442, 443, 451) which is unaffected by the potential upcoming battery damage for the collection of battery modules.

3. An energy storage system (290) comprising a collection (270, 280) of one or more battery modules (271, 281) and a battery management system (291) associated with the collection (270, 280) of battery modules (271, 281), wherein the battery management system is configured to:
detect a battery event which indicates potential upcoming damage for the collection of battery modules;
select, based on a type (310, 320, 330) of the battery event, a sub-set (351, 361, 371) of measurement data from a set (300) of available measurement data relating to the collection of battery modules, wherein the selected sub-set of measurement data is most relevant - among the available measurement data - for analysis of the battery event; and
cause the selected sub-set of measurement data to be stored at a storing location (234, 240, 260, 441, 442, 443, 451) which is unaffected by the potential upcoming battery damage for the collection of battery modules.

4. The energy storage system of claim 3, wherein the storing location comprises a remote storing location (260, 451) in relation to equipment (400) comprising the energy storage system (290), and wherein the battery management system (291) is configured to cause the selected sub-set of measurement data to be stored at the storing location by transmission of the selected sub-set of measurement data to the remote storing location.

5. The energy storage system of any of claims 3-4, wherein the storing location comprises an on-board storing location (234, 240, 441, 442, 443) of equipment (400) comprising the energy storage system (290), which is at a distance from the potential upcoming battery damage, wherein the distance exceeds a distance threshold, and wherein the battery management system (291) is configured to cause the selected sub-set of measurement data to be stored at the storing location by transfer of the selected sub-set of measurement data to the on-board storing location.

6. The energy storage system of any of claims 3-5, wherein the storing location comprises two or more different on-board storing locations (234, 240, 441, 442, 443) of equipment (400) comprising the energy storage system (290), and wherein the battery management system (291) is configured to cause the selected sub-set of measurement data to be stored at the storing location by transfer of a copy of the selected sub-set of measurement data to each of the different on-board storing locations.

7. A piece of equipment (400) comprising:
the energy storage system (290) of any of claims 3-6; and
one or more on-board storing location(s) (234, 240, 441, 442, 443) and/or a transmitter (250, 450) configured to transmit the selected sub-set of measurement data to a remote storing location (260, 451).

8. The piece of equipment of claim 7, wherein the piece of equipment is one of: a land vehicle (400), a marine vehicle, an aerial vehicle, a construction equipment appliance, a mobile or stationary industrial appliance, an energy distribution network station, and a stationary battery energy storage system.

9. A computer-implemented method (100) for managing measurement data relating to an energy storage system (210, 290, 480), the method comprising:
detecting (110), by processing circuitry (230, 291, 490) of a computer system (500), a battery event which indicates potential upcoming battery damage for the energy storage system;
selecting (130), by the processing circuitry, a sub-set (351, 361, 371) of measurement data from a set (300) of available measurement data, wherein the selection is based on a type (310, 320, 330) of the battery event, wherein the selected sub-set of measurement data is most relevant - among the available measurement data - for analysis of the battery event; and
causing (140), by the processing circuitry, the selected sub-set of measurement data to be stored at a storing location (234, 240, 260, 441, 442, 443, 451) which is unaffected by the potential upcoming battery damage.

10. The method of claim 9, wherein the storing location comprises a remote storing location in relation to equipment comprising the energy storage system, and wherein causing (140) the selected sub-set of measurement data to be stored at the storing location comprises transmitting (142) the selected sub-set of measurement data to the remote storing location.

11. The method of any of claims 9-10, wherein the storing location comprises an on-board storing location of equipment comprising the energy storage system which is at a distance from the potential upcoming battery damage, wherein the distance exceeds a distance threshold, and wherein causing (140) the selected sub-set of measurement data to be stored at the storing location comprises transferring (144) the selected sub-set of measurement data to the on-board storing location.

12. The method of any of claims 9-11, wherein the storing location comprises two or more different on-board storing locations of equipment comprising the energy storage system, and wherein causing (140) the selected sub-set of measurement data to be stored at the storing location comprises transferring (144) a copy of the selected sub-set of measurement data to each of the different on-board storing locations.

13. The method of any of claims 9-12, wherein the selected sub-set (351, 361, 371) of measurement data is a selected first sub-set of measurement data, the method further comprising:
selecting, by the processing circuitry, a second sub-set (352, 362, 372) of measurement data from the set of available measurement data with the selected first sub-set of measurement data removed; and
causing, by the processing circuitry, the selected second sub-set of measurement data to be stored at the storing location, after storing of the selected first sub-set of measurement data.

14. A computer program product (600) comprising program code for performing, when executed by the processing circuitry, the method of any of claims 9-13.

15. A non-transitory computer-readable storage medium (600) comprising instructions, which when executed by the processing circuitry, cause the processing circuitry to perform the method of any of claims 9-13.
